Europäisches Patentamt

European Patent Office

Office européen des brevets

(19)

(11) Numéro de publication: **0 250 276 B1**

(12) **FASCICULE DE BREVET EUROPEEN**

(45) Date de publication de fascicule du brevet:
24.07.91

(51) Int. Cl.⁵: **H04L 12/00**, H04L 12/46,
H04J 3/16

(21) Numéro de dépôt: **87401035.8**

(22) Date de dépôt: **06.05.87**

(54) **Interface entre un équipement de terminaison de circuit de données et plusieurs équipements terminaux de traitement de données.**

(30) Priorité: **27.05.86 FR 8607555**

(43) Date de publication de la demande:
**23.12.87 Bulletin 87/52**

(45) Mention de la délivrance du brevet:
**24.07.91 Bulletin 91/30**

(84) Etats contractants désignés:
**DE GB IT SE**

(56) Documents cités:
**EP-A- 0 006 986**
**WO-A-83/00413**
**DE-A- 2 116 784**

**PROCEEDINGS OF THE SIXTH INTERNATIO-
NAL CONFERENCE ON COMPUTER COMMU-
NICATION - PATHWAYS TO THE INFORMA-
TION SOCIETY, Londres, 7-10 septembre
1982, éditeur M.B. Williams, pages 79-84,
"Sponsored by The International Council for
Computer Communication (ICCC), hosted by
British Telecommunications", North-Holland
Publishing Company, Amsterdam, NL; J.A.
LOCKWOOD et al.: "The Australian digital**

**data service"**

(73) Titulaire: **Montaudoin, Patrice**
**38, rue de la Grenouillette**
**F-78190 Montigny-le-Bretonneux(FR)**

(72) Inventeur: **Montaudoin, Patrice**
**38, rue de la Grenouillette**
**F-78190 Montigny-le-Bretonneux(FR)**

(74) Mandataire: **Martinet & Lapoux**
**BP 405**
**F-78055 St. Quentin en Yvelines Cédex(FR)**

EP 0 250 276 B1

## Description

La présente invention concerne, d'une manière générale, une interface entre un équipement de terminaison de circuit de données (ETCD) et un équipement terminal de traitement de données (ETTD), fonctionnant en mode synchrone et raccordable à une ligne d'un réseau de transmission de données à commutation de circuit.

Le fonctionnement d'une telle interface est défini dans l'avis X.21, du Comité Consultatif International Télégraphique et Téléphonique (C.C.I.T.T.), fascicule VIII.3 en langue anglaise, pages 35 à 85, 1984, Malaga-Torremolinos.

Actuellement, la connexion de plusieurs sources d'information, telles que terminaux, à un réseau de commutation est réalisé en point à point. En d'autres termes, un terminal est relié au réseau de commutation par une interface tel que définie dans l'avis X.21, comprenant un équipement terminal (ETTD) associé au terminal, un équipement de terminaison (ETCD) constituant une ressource ou un accès du terminal au réseau, et un bus bidirectionnel reliant les deux équipements à travers lesquels des données et de la signalisation sont échangés entre les équipements selon un protocole défini dans l'avis X.21.

Si on désire raccorder plusieurs terminaux à un même accès de réseau, il est nécessaire de prévoir un équipement intermédiaire permettant "d'éclater" en étoile la liaison reliant initialement l'équipement de terminaison constituant l'accès à un équipement terminal, en plusieurs sous-liaisons individuelles desservant respectivement les terminaux par l'intermédiaire des équipements terminaux associés.

Toutefois, la WO-A-83/00413 (Fig.4) propose de relier plusiers équipements terminaux (ETTD, ou en anglais DTE) à un unique équipement de terminaison (ETCD, ou en anglais DCE) à travers un bus de données distribué. Cette demande de brevet ne concerne que des tronçons de cable formant le bus distribué pour raccorder un équipement terminal au bus.

La présente invention vise à fournir une interface à bus distribué offrant une modularité entre un équipement de terminaison (ETCD) et plusieurs équipements terminaux (ETTD), tout en ne modifiant pas le fonctionnement initial des équipements et en conservant une complète compatibilité avec le protocole d'échange selon l'avis X.21 précité. Ainsi, moyennant quelques adjonction aux équipements terminaux, l'invention permet de partager entre plusieurs terminaux la même ressource constituée par l'équipement de terminaison, et permet également un multiplexage de données synchrones provenant des équipements terminaux et un partage de fonctions, telles que transmission de données et gestion de signalisation, entre les terminaux.

A cette fin, une interface entre un équipement de terminaison de circuits de données et plusieurs équipements terminaux de traitement de données est telle que définie dans la revendication 1.

L'aspect modulaire de l'interface selon l'invention est obtenu d'une part grâce à des moyens d'accès "banalisés" associés aux équipements terminaux qui peuvent être de différents types, par exemple voués à transmettre des données, ou de la signalisation ou les deux à la fois, et d'autre part, grâce au partage du bus en des cordons de câble raccordables en cascade et constituant des sections de bus desservant respectivement les équipements terminaux.

D'autres avantages et caractéristiques de l'invention apparaîtront plus clairement à la lecture de la description suivante de plusieurs réalisations préférées de l'invention en référence aux dessins annexés correspondants, dans lesquels :

- la Fig.1 montre schématiquement une interface modulaire selon l'invention ;
- la Fig.2 est un bloc-diagramme schématique montrant des moyens associés à un équipement terminal (ETTD) pour accéder à un bus reliant des équipements terminaux à un équipement de terminaison (ETCD) selon une première réalisation ;
- la Fig.3 montre des signaux logiques propres au fonctionnement des moyens pour accéder selon la Fig. 2 ; et
- la Fig.4 est un bloc diagramme schématique de moyens pour accéder associés à un équipement terminal (ETTD) selon une seconde réalisation.

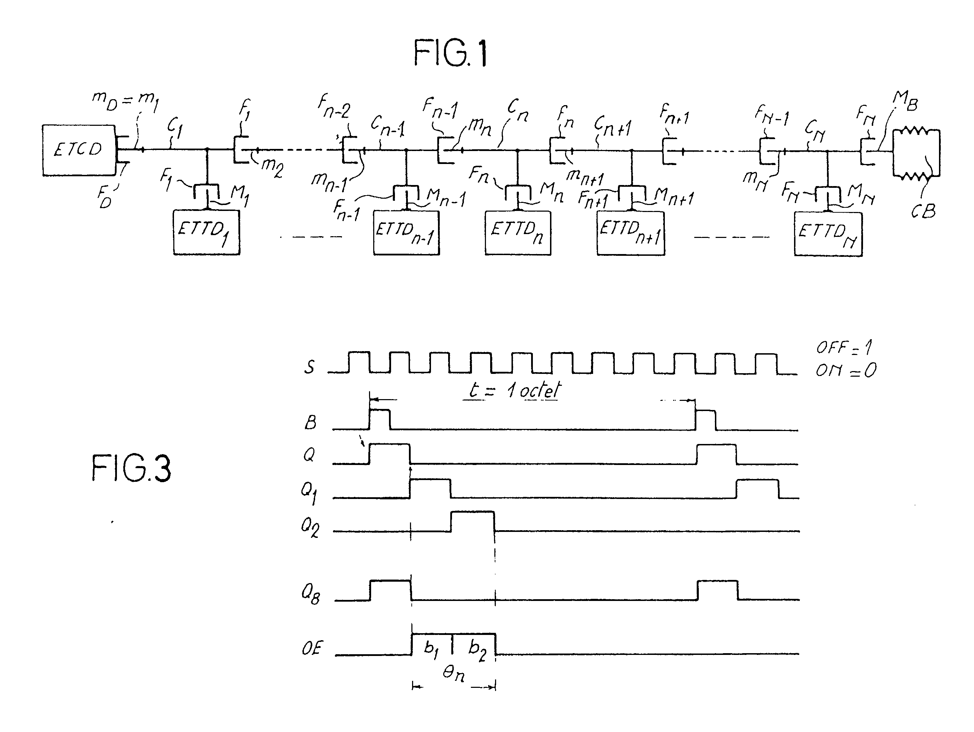

En référence à la Fig.1, une interface selon l'invention relie N équipements terminaux de traitement de données $ETTD_1$ à $ETTD_N$ à un équipement de terminaison de circuit de données ETCD à travers un bus bidirectionnel distribué à accès multiples. L'équipement ETCD constitue un moyen d'accès commun des équipements $ETTD_1$ à $ETTD_N$ à une même ligne de transmission d'un réseau commuté. Les équipements précités fonctionnent en mode synchrone conformément à l'avis X.21 du C.C.I.T.T., c'est-à-dire des échanges de signaux entre l'un quelconque des équipements $ETTD_1$ à $ETTD_N$ et l'équipement ETCD sont conformes à l'avis précité.

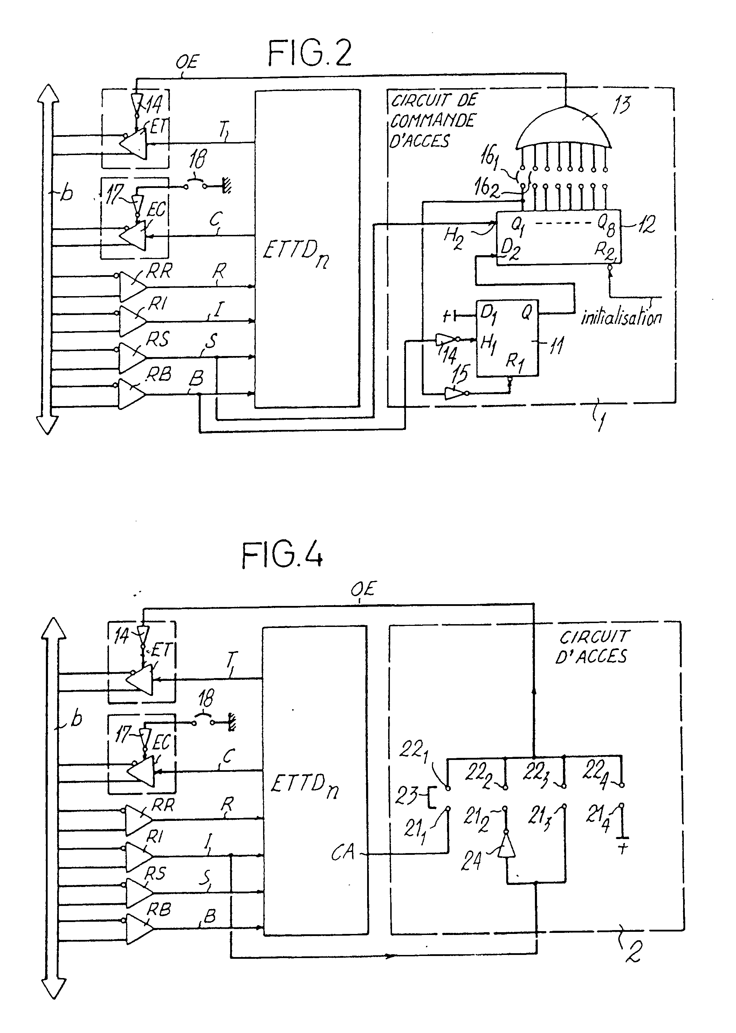

On rappelle en référence à la Fig. 2 ou 4 qu'un équipement terminal de traitement de données $ETTD_n$, où n est compris entre l et N, offre notamment deux sorties T et C reliées à deux paires symétriques de fils conducteurs du bus b à travers deux émetteurs ET et EC, dits également "générateurs", et quatre entrées R, I, S et B reliées à quatre paires symétriques de fils conducteurs à travers des récepteurs RR, RI, RS et RB respectivement. Un émetteur ET, EC est destiné à convertir un signal binaire à la sortie T,C en des tensions symétriques dans la paire respective de fils ; un récepteur RR, RI, RS , RB effectue la conversion inverse. Ainsi un bit à l'état "I" dit état "ouvert" ou "OFF", correspond à une polarité positive sur un premier fil de la paire respective par rapport au second fil de la paire, et un bit à l'état "O", dit état "fermé" ou "ON", correspond à une polarité négative sur le premier fil par rapport au second fil. Différentes caractéristiques des émetteurs et récepteurs sont indiquées dans l'avis V.11 du C.C.I.T.T., fascicule VIII.1 en langue anglaise, pages 31 à 43, 1980, Genève.

Les entrées et sorties d'un équipement $ETTD_n$ transmettent et reçoivent les signaux suivants :

- un signal binaire de données est transmis vers l'équipement ETCD par la sortie T pendant une durée périodique d'accès ou de transfert de données $\theta_n$ qui dépend notamment du débit du terminal desservi par l'équipement $ETTD_n$ et défini dans la suite ; à cet effet, l'émetteur ET reçoit par une entrée de commande un signal spécial de commande OE qui valide l'émission pendant la durée $\theta_n$ et met en haute impédance la sortie $ET_n$ pendant la durée complémentaire $t-\theta_n$, où $t$ est une durée de trame définie dans la suite ; pendant des durées $\theta_n$, l'équipement ETTD peut transmettre par exemple des informations proprement dites, mais également des signaux de commande pendant l'établissement d'un appel et d'autres phases d'appel et de signalisation spécifiques ;
- un signal binaire de contrôle est transmis par la sortie C vers l'équipement ETCD à travers l'émetteur EC et est utilisé par l'équipement ETTD qui gère la signalisation ;
- un signal binaire de données transmis par l'ETCD est reçu par l'entrée R et est équivalent au signal transmis par la sortie T des équipements distants suivant l'autre direction de transmission ;
- un signal binaire d'indication transmis par l'ETCD est reçu par l'entrée I et indique l'état de phases de contrôle pendant par exemple un appel, d'une manière équivalente au signal à la sortie C selon l'autre direction de transmission ; ainsi, par exemple, l'état "ON" à l'entrée I signifie qu'un signal d'information est reçu à l'entrée R, et l'état "OFF" à l'entrée I signifie qu'un signal de signalisation est reçu par l'entrée R ;
- un signal d'horloge binaire est transmis en permanence par l'équipement ETCD, jouant le rôle d'équipement maître, vers l'entrée S de l'équipement $ETTD_n$. jouant le rôle d'équipement esclave ; le signal d'horloge indique le débit binaire des signaux transmis et reçus par les bornes T, C et R,I, et plus généralement, le débit dans le bus b ; et
- un signal d'horloge d'octets est transmis par l'équipement ETCD vers l'entrée B de l'équipement $ETTD_n$, afin d'initialiser à une période de trame $t$ de l'interface les instants d'accès de l'équipement $ETTD_n$ correspondant à des transmissions et réceptions de données et de signalisation par les sorties T, C, et les entrées R, I.

Une solution alternative, pour les réseaux ne fournissant pas l'horloge B ou pour les cas d'interfonctionnement avec des réseaux n'utilisant pas cette horloge, consiste à rechercher dans le signal binaire reçu sur la borne R un motif caractéristique indiquant l'instant d'émission de l'équipement $ETTD_n$ sur la sortie T.

Afin de fixer les idées, on suppose que le débit initial dans le bus b, est égal à 64 kbit/s. Une trame a une durée de $t = 125$ $\mu s$ et contient 8 bits ayant des positions $b_1$ à $b_8$ définissant au plus huit canaux. Ainsi, les signaux binaires transmis par les équipements $ETTD_I$ à $ETTD_N$ sont multiplexés par division du temps en fonction de leur débit propre $d_I$ à $d_N$, c'est-à-dire comme pour une commutation de circuits, quelles que soient les informations, circuits ou parole, et paquets échangés entre les équipements $ETTD_I$ à $ETTD_N$ et l'équipement ETCD. La répartition des débits est ainsi choisie dans l'interface en fonction des débits spécifiques des terminaux $ETTD_I$ à $ETTD_N$. Par exemple, l'interface comprend $x + y + z$ équipements ETTD utilisant des sous-débits respectifs de 8, 16 et 32 kbit/s, de sorte que la relation suivante soit satisfaite

$$8x + 16y + 32z = 64$$
$$avec \ x + y + z = N < 9$$

L'utilisation d'un sous-débit de 8,16 ou 32 kbit/s permet de véhiculer des informations à un débit inférieur par une méthode de bourrage telle que définie dans les avis X30 ou V110 (également référencés I461 et I463 respectivement) du CCITT, 1984, Malaga Torremolinos.

Pour un équipement terminal utilisant un débit de 8 kbit/s, une durée d'accès est égale à 15,62 $\mu s$ et définit un canal indiqué par une position d'un bit déterminé dans la trame de 8 bits ; pour des équipements terminaux ayant un débit de 16 et 32 kbit/s, les durées d'accès sont égales à 31,25 $\mu s$ et 62,5 $\mu s$ et définissent des canaux indiqués par deux et quatre positions de bit successives ou non dans la trame de 8 bits respectivement.

L'interface selon l'invention permet d'envisager plusieurs possibilités de combinaison de terminaux de différents types, bien que les échanges de signaux avec l'équipement ETCD demeurent compatibles avec l'avis X.21.

Selon une première réalisation montrée à la Fig.2, un équipement $ETTD_n$ est un équipement standard, c'est-à-dire échange bidirectionnellement des données et des signalisations avec l'équipement ETCD. Dans ce cas est adjoint à l'équipement $ETTD_n$, un circuit de commande d'accès 1.

Le circuit 1 comprend essentiellement, selon la réalisation illustrée à la Fig. 2, une bascule bistable 11 du type D, un registre à décalage 12 ayant 8 étages, et une porte OU à 8 entrées 13. Des entrées d'horloge $H_1$ et $H_2$ de la bascule 11 et du registre 12, sont reliées respectivement à travers un inverseur 14 et directement, aux entrées B et S de l'équipement $ETTD_n$. Comme déjà dit, le signal à l'entrée S est un signal d'horloge, ici à la fréquence de 64 kHz, et le signal B est un signal composé d'impulsions de largeurs égales à 7,8 $\mu$s, transmis à la période de trame t = 125 $\mu$s pour indiquer le début de la durée d'accès du terminal $ETTD_n$ au bus b. Comme montré à la Fig.3, une sortie Q de la bascule 11 transmet une impulsion égale à la largeur d'une position de bit, soit 15,62 $\mu$s dont le front montant est initialisé par le front montant du signal d'horloge d'accès à l'entrée B, et dont le front descendant est déterminé par l'enregistrement de l'impulsion à la sortie $Q_1$ dans le registre 12. En effet, la sortie O de la bascule 11 est reliée à une entrée $D_2$ du premier étage du registre 12, et une sortie $Q_1$ de ce premier étage est reliée à une entrée de remise à zéro $R_1$ de la bascule 11 à travers un inverseur 15. Ainsi, au rythme du signal d'horloge S, l'impulsion à la sortie Q de la bascule est décalée d'un étage au suivant dans le registre 12, et des entrées $O_1$ à $Q_8$ du registre 12 délivrent respectivement huit impulsions ayant une largeur de 15,62$\mu$ s qui sont adjacentes pendant une période de trame de 125 $\mu$s.

Lorsque l'équipement $ETTD_n$ fonctionne avec un débit de 8, 16, 32 ou 64 kbit/s, une, deux, quatre ou huit sorties successives ou non du registre 12 sont reliées à une, deux, quatre ou huit entrées de la porte OU 13 par des cavaliers conducteurs enfichables ou tout autre circuit ayant une fonction logique équivalente. La sortie OE de la porte 13 est reliée à l'entrée de commande de l'émetteur ET à travers un inverseur 14. Par exemple, lorsque le terminal à un débit de 16 kbit/s selon la réalisation illustrée aux Figs. 2 et 3, les sorties $Q_1$ et $Q_2$ du registre 12, sont seules reliées à des entrées de la porte OU par deux cavaliers $16_1$ et $16_2$, si bien que la sortie de la porte OU 13 transmet une impulsion OE de durée $\theta_n = 2$ x 15,62 = 31,25 $\mu$s permettant à l'équipement $ETTD_n$ de transmettre des informations vers l'équipement ETCD par la borne T.

Selon d'autres réalisations illustrées à la Fig.4, un circuit d'accès 2 est adjoint à n'importe quel équipement terminal $ETTD_1$ à $ETTD_N$ et est adapté au type de fonctionnement de l'équipement en sélectionnant l'une de quatre paires de bornes $21_1$-$22_1$ à $21_4$-$22_4$ propres à recevoir par enfichage un cavalier conducteur 23 selon la réalisation illustrée, ou à être reliées sélectivement par un contact mobile d'un commutateur ou tout autre circuit ayant une fonction logique équivalente.

Des premières bornes $21_1$, $21_2$ $21_3$ et $21_4$ des paires précitées sont reliées respectivement à une sortie de commande d'accès CA de l'équipement $ETTD_n$, à travers un inverseur 24 et directement à la borne d'entrée I de l'équipement $ETTD_n$, et à une borne de polarité positive d'une source de tension. Des secondes bornes $22_1$ à $22_4$ des paires précitées sont reliées à l'entrée de commande OE de l'émetteur ET à travers l'inverseur 14.

En outre, comme montré aux Figs.2 et 4, une borne de commande de l'émetteur EC peut être reliée à la terre à travers un inverseur 17 et un cavalier conducteur enfichable 18 ou un circuit ayant une fonction logique équivalente.

Lorsque l'équipement $ETTD_n$ commande lui-même son accès au bus b, le cavalier 23 relie les bornes $21_1$ à $22_1$, et le cavalier 18 n'est pas utilisé. L'équipement dans ce cas décide de l'instant auquel il communique avec l'équipement ETCD. L'accès au réseau commuté est alors géré par l'équipement $ETTD_n$ grâce à une procédure d'échange de signaux dans les canaux respectifs transmis et reçu par les bornes T et R, procédure tel que "vote" n'appartenant pas à l'objet de l'invention.

Lorsque l'équipement $ETTD_n$ est relié à un terminal ne transmettant que des données, le cavalier 23 relie les bornes $21_2$ et $22_2$ de manière à permettre une transmission de données par la borne T, en réponse à un état "ON" à la borne I, et le cavalier 18 est utilisé pour relier la terre à l'inverseur 17 afin d'inhiber toute transmission de signalisation par la borne C.

Lorsque l'équipement $ETTD_n$ est relié à un terminal ne gérant que de la signalisation, c'est-à-dire n'échange que des signaux de signalisation avec l'équipement ETCD, le cavalier 23 relie les bornes $21_3$ et $22_3$ afin de permettre une transmission de signalisation par la borne T en réponse à un état "OFF" à la borne I, et le cavalier 18 n'est pas utilisé.

Lorsque l'équipement $ETTD_n$ est relié à un terminal standard, c'est-à-dire échange bidirectionnellement aussi bien des données que de la signalisation avec l'équipement ETCD, le cavalier 23 relie les bornes $21_4$ et $22_4$ pour permettre un accès "permanent" au bus b par la borne T, en fonction des ordres reçus par les bornes R et I notamment, ce qui équivaut à relier les bornes $21_2$ et $22_2$ et à relier les bornes $21_3$ à $22_3$. Dans ce cas, le cavalier 18 n'est pas utilisé.

Ainsi parmi les possibilités offertes par des équipements dotés de circuits d'accès banalisés 2 tels que celui montré à la Fig.4, il peut être envisagé par exemple :

- de spécialiser un terminal uniquement à la gestion de la signalisation ce qui décharge un ou plusieurs terminaux transmettant des données de cette fonction de signalisation ; dans ce cas, la paire symétrique reliée aux bornes I des équipements ETTD est à l'état ouvert "OFF" lorsque le terminal gérant la signalisation est actif, et est à l'état fermé ou "ON" lorsque le terminal transmettant les données est actif ; et

- de sélectionner au moins un terminal qui n'est plus "esclave" de l'équipement ETCD et qui décide lui-même de son accès au bus b.

En outre, les divers équipements ETTD décrits en référence aux Fig. 2 et 4 peuvent être reliés au même bus b, si un équipement terminal est destiné à gérer de la signalisation et d'autres équipements terminaux connectés en cascade sont destinés à utiliser les informations transmises en décidant de leur accès au bus pendant l'état fermé "ON" à la borne I.

En se référant de nouveau à la Fig.1, il apparait que l'interface a une structure modulaire afin de déconnecter un quelconque équipement ETTD du bus b, ou de connecter un nouvel équipement ETTD au bus b sans modifier les interconnexions des autres équipements terminaux à travers le bus. A cet effet, l'invention met en oeuvre des connecteurs mâles et femelles standards connus, tels que définis dans la norme internationale de l'ISO (Organisation internationale de normalisation), publiée sous la référence No : ISO 4903-1980 (F), 15 Juin 1980. Selon cette norme, un connecteur mâle comporte des broches mâles et un boîtier femelle, et un connecteur femelle comporte des broches femelles et un boîtier mâle.

Comme montré à la Fig.1, les bornes de paires symétriques des émetteurs et récepteurs de chaque équipement $ETTD_I$ à $ETTD_N$ sont constituées par des broches mâles d'un connecteur mâle $M_I$ à $M_N$ enfichées dans des bornes femelles d'un connecteur femelle $F_I$ à $F_N$. A l'inverse, les bornes de paires symétriques des émetteurs et récepteurs de l'équipement ETCD sont constituées par les broches femelles d'un connecteur femelle $F_D$ recevant les broches mâles d'un connecteur mâle $m_D$ = $m_I$ à une première extrémité du bus b.

Le bus b est partagé en N sections de bus. Chaque section est constituée par un cordon chaînable de câble $C_I$ à $C_N$ ayant trois extrémités, et est associée à un équipement terminal $ETTD_I$ à $ETTD_N$. Par exemple pour le cordon $C_n$,

une première extrémité du cordon $C_n$ orientée vers l'équipement ETCD comporte un connecteur mâle $m_n$ coopérant avec un connecteur femelle $f_{n-I}$ à une seconde extrémité du cordon précédent $C_{n-I}$,

une seconde extrémité du cordon $C_n$ orientée vers une seconde extrémité du bus b opposée à l'équipement ETCD comporte un connecteur femelle $f_n$ coopérant avec un connecteur mâle $m_{n+I}$ à une première extrémité du cordon suivant $C_{n+I}$, et

une troisième extrémité du cordon $C_n$ située à proximité de la seconde extrémité du cordon $C_n$, comporte le connecteur femelle $F_n$ coopérant avec le connecteur mâle $M_n$ de l'équipement $ETTD_n$.

Pour le premier cordon $C_I$, la première extrémité de celui-ci est constituée par le connecteur mâle $m_I$ coopérant avec le connecteur femelle $F_D$ desservant l'équipement de terminaison ETCD. A l'extrémité opposée de l'équipement ETCD, la seconde extrémité du dernier cordon $C_N$ comporte un connecteur femelle $f_N$ coopérant avec un connecteur mâle $M_B$ qui, selon la réalisation illustrée, dessert un circuit de terminaison, dit également circuit bouchon CB. Le circuit CB comprend des impédances de terminaison et d'adaptation des paires symétriques du bus B, de l'ordre de 100 à 150 Ohms, connectées aux paires R, I, S et B sachant que les paires T et C sont terminées dans l'équipement ETCD. Selon d'autres variantes, le circuit bouchon CB est localisé à l'intérieur des équipements ETTD, et seul l'équipement ETTD opposé à l'équipement ETCD par rapport au bus b active ce circuit bouchon ; dans ce cas, le dernier cordon ne reçoit pas de raccordement sur l'extrémité $f_N$.

Ainsi, selon l'agencement modulaire des équipements montré à la Fig. 1, un nouvel équipement terminal ETTD peut être raccordé au bus, par exemple entre les connecteurs $f_{n-I}$ et $m_n$, en introduisant entre ceux-ci un nouveau cordon ayant une première extrémité constituée par un connecteur mâle coopérant avec le connecteur $f_{n-I}$, une seconde extrémité constituée par un connecteur femelle coopérant avec le connecteur $m_n$, et une troisième extrémité constituée par un connecteur femelle coopérant avec le connecteur mâle desservant le nouvel équipement.

## Revendications

1. Interface entre un équipement de terminaison de circuits de données (ETCD) et plusieurs équipements terminaux de traitement de données ($ETTD_1$ à $ETTD_N$), l'équipement de terminaison (ETCD) étant destiné initialement à échanger des données et/ou de la signalisation avec un unique équipement terminal de traitement de données selon une procédure prédéterminée à travers une liaison ayant un débit prédéterminé transmettant, entre autres, des données sous forme de mots (octets) ayant un nombre prédéterminé de bit, la liaison etant un bus distribué (b, $C_1$-$C_N$) auxdits équipements terminaux (ETTD$_1$ à ETTD$_N$), caractérisé en ce que chacun desdits mots constitue une trame de canaux de données multiplexés temporellement et assignés respectivement auxdits équipements terminaux, chaque canal étant défini par un nombre (x, y, z) de positions de bit prédéterminées dans un mot, déterminé en fonction du débit de l'équipement terminal respectif et en ce que chacun des équipements terminaux (ETTD$_1$ à ETTD$_N$) est associé à des moyens d'accès (1; 2) pour commander une transmission de données et/ou de signalisation dans le canal assigné respectif, de l'équipement terminal vers l'équipement de terminaison (ETCD).

2. Interface conforme à la revendication 1, caractérisé en ce que les moyens d'accès (1) associés à au moins l'un des équipements terminaux (ETTD$_n$) commandent une transmission de données dans le canal assigné respectif, de l'équipement terminal (ETTD$_n$) vers l'équipement de terminaison (ETCD), en réponse à un signal d'horloge de début de trame (B) transmis par l'équipement de terminaison (ETCD) à travers le bus (b, $C_1$-$C_N$).

3. Interface conforme à la revendication 2, caractérisée en ce que les moyens d'accès (1) comprennent des moyens (11) pour produire une impulsion (Q) ayant une largeur égale à la position d'un bit dans un mot (octet) en réponse au signal d'horloge de début de trame, un registre à décalage (12) ayant autant d'étages que de bits dans un mot (octet) pour décaler d'un étage au suivant ladite impulsion (Q) au rythme d'un signal d'horloge de bit (S) transmis par l'équipement de terminaison (ETCD) à travers le bus (b, $C_1$-$C_N$), et une porte OU (13) ayant autant d'entrées que de positions de bits dans un mot assignées audit équipement terminal (ETTD$_n$), des entrées de la porte OU étant reliées à des étages du registre ayant des emplacements dans le registre identiques aux positions de bit dans un mot définissant le canal de l'équipement terminal, et la porte OU ayant une sortie commandant à travers des moyens de transmission de données (ET) de l'équipement terminal (ETTD$_n$) des transmissions de données vers l'équipement de terminaison (ETCD) pendant lesdites positions de bit respectives.

4. Interface conforme à la revendication 3, caractérisée en ce que la porte OU (13) comporte autant d'entrées que de bits dans un mot (octet), et en ce que des moyens, tels que cavaliers conducteurs enfichables (16$_1$, 16$_2$), sont prévus pour raccorder sélectivement des entrées de la porte OU à des sorties des étages du registre à décalage (12) en fonction du nombre de positions de bit assignées à l'équipement terminal (ETTD$_n$) et desdites positions de bit dans un mot.

5. Interface conforme à la revendication 1, caractérisée en ce que les moyens d'accès (2) d'au moins l'un des équipements terminaux (ETTD$_n$) commandent son accès au bus (b), et relient une sortie de commande d'accès (CA) de l'équipement à une entrée de commande (OE) de moyens de transmission de données (ET) associès audit équipement terminal pour commander de transmissions de données vers l'équipement de terminaison (ETCD) à travers le bus (b, $C_1$-$C_N$).

6. Interface conforme à la revendication 1, caractérisée en ce qu'au moins l'un des équipements terminaux (ETTD$_n$) est un équipement utilisant des données d'information proprement dites, et les moyens d'accès (2) associés audit équipement terminal comprennent des moyens inverseurs (24, 21$_2$, 22$_2$) reliant d'une part des moyens (RI) associés à l'équipement terminal pour recevoir des signaux d'indication de transmission de données et de signalisation provenant de l'équipement de terminaison (ETCD) à travers le bus (b, $C_1$-$C_N$), et d'autre part, une entrée de commande (OE) de moyens (ET) associés à l'équipement terminal pour transmettre des données de l'équipement terminal (ETTD$_n$) vers l'équipement de terminaison (ETCD) à travers le bus (b, $C_1$-$C_N$) en réponse à un signal d'indication de transmission de données (I = "ON").

7. Interface conforme à la revendication 1, caractérisée en ce qu'au moins l'un des équipements terminaux (ETTD$_n$) est un équipement gérant de la signalisation, et les moyens d'accès (2) associés audit équipement comprennent des moyens (21$_3$, 22$_3$) pour relier directement d'une part, des moyens (RI) associés à l'équipement terminal pour recevoir des signaux d'indication de transmission de données et de signalisation provenant de l'équipement de terminaison (ETCD) à travers le bus (b, $C_1$-$C_N$) et, d'autre part, une entrée de commande (OE) de moyens (ET) associés à l'équipement terminal (ETTD$_n$) pour transmettre des données vers l'équipement (ETCD) à travers le bus (b, $C_1$-$C_N$), en réponse à un signal d'indication de transmission de signalisation (I = "OFF").

8. Interface conforme aux revendications 5 à 7, caractérisée en ce que les moyens d'accès (2) associés à chaque équipement terminal (ETTD_n) comportent des moyens, tels que cavalier conducteur (23) enfichable sélectivement dans l'une de quatre paires de bornes prédéterminées ($21_1$, $22_1$, à $21_4$, $22_4$),pour connecter sélectivement d'une part une sortie de commande d'accès (CA) de l'équipement terminal, à travers un inverseur (24) et directement des moyens (RI) associés à l'équipement terminal pour recevoir des signaux d'indication de transmission de données et de signalisation provenant de l'équipement de terminaison (ETCD) à travers le bus (b,) et une borne de polarité prédéterminée ( + ), et d'autre part, une entrée de commande (OE) des moyens (ET) pour transmettre des données et de la signalisation vers l'équipement de terminaison (ETCD) à travers le bus (b, $C_1$-$C_N$), respectivement lorsque l'équipement terminal (ETTD_n) commande lui-même son accès au bus (b, $C_1$-$C_{N)}$, est un équipement utilisant des données d'information proprement dites, est un équipement gérant de la signalisation, et est un équipement standard utilisant des données et gérant de la signalisation.

9. Interface conforme à l'une quelconque des revendications 1 à 8, caractérisée en ce que le bus (B, $C_1$-$C_N$)est partagé en plusieurs sections de câble respectivement associées aux équipements terminaux (ETTD_1 à ETTD_N), chaque section de câble comportant un cordon de câble ($C_n$) ayant une première extrémité ($m_n$) connectable à une seconde extrémité ($m_{n-1}$) du cordon de câble ($C_{n-1}$) de la section précédente, une seconde extrémité ($f_n$) connectable à une première extrémité ($m_{n+1}$) du cordon de câble ($C_{n+1}$) de la section suivante, et une troisième extrémité ($F_n$) connectable à un connecteur ($M_n$) desservant ledit équipement terminal (ETTD_n).

10. Interface conforme à la revendication 9, caractérisée en ce que la première extrémité ($m_n$) de chaque cordon de câble ($C_n$) est un connecteur d'un premier type, tel qu'à broches mâles, et les seconde et troisème extrémités, ($f_n$, $F_n$) du cordon de câble sont connecteurs d'un second type, tels qu'à broches femelles.

**Claims**

1. An interface between a data circuit terminating equipment (DCE) and a number of data processing terminal equipments (DTE_1 to DTE_N), the terminating equipment (DCE) being adapted initially to exchange data and/or signalling with a single data processing terminal equipment in accordance with a predetermined procedure via a link which has a a predetermined bit rate and which, inter alia, transmits data in the form of words (octets) having a predetermined bit number, the link being a distributed bus (b, $C_1$ - $C_N$) at the said terminal equipments (DTE_1 to DTE_N), characterised in that each of said words forms a time-multiplexed data channel frame, said channels being respectively allocated to said terminal equipments, each channel being defined by a number (x, y, z) of predetermined bit positions in a word, such number being determined in dependence on the bit rate of the respective terminal equipment, and in that each of the terminal equipments (DTE_1 to DTE_N) is associated with access means (1; 2) for controlling a data and/or signalling transmission in the respective allotted channel of the terminal equipment to the terminating equipment (DCE).

2. An interface according to claim 1, characterised in that the access means (1) associated with at least one of the terminal equipments (DTE_n) control data transmission in the respective allotted channel from the terminal equipment (DTE_n) to the terminating equipment (DCE) in response to a frame start clock signal (B) transmitted by the terminating equipment (DCE) via the bus (b, $C_1$ - $C_N$).

3. An interface according to claim 2, characterised in that the access means (1) comprise means (11) for producing a pulse (Q) having a width equal to the position of a bit in a word (octet) in response to the frame start clock signal, a shift register (12) having as many stages as there are bits in a word (octet) for shifting the said pulse (Q) from one stage to the next in time with a bit clock signal (S) transmitted by the terminating equipment (DCE) via the bus (b, $C_1$ - $C_N$) and an OR gate (13) having as many inputs as there are bit positions in a word allocated to the terminal equipment (DTE_n), inputs of the OR gate being connected to register stages having in the register locations which are identical to the bit positions in a word defining the channel of the terminal equipment, and the OR gate having an output controlling, via data transmissions means (ET) of the terminal equipment (DTE_n), data transmissions to the terminating equipment (DCE) during the said respective bit positions.

4. An interface according to claim 3, characterised in that the OR gate (13) comprises as many inputs as there are bits in a word (octet), and in that means, such as plug-in conductive links ($16_1$, $16_n$) are provided for selectively connecting inputs of the OR gate to outputs of the stages of the shift register 12 in dependence on the number of bit positions allocated to the terminal equipment (DTEₙ) and the said bit positions in a word.

5. An interface according to claim 1, characterised in that the access means (2) of at least one of the terminal equipments (DTEₙ) control its access to the bus (b) and connect an access control output (CA) of the equipment to a control input (OE) of data transmission means (ET) associated with said terminal equipment to control data transmissions to the terminating equipment (DCE) via the bus (b, $C_1$ - $C_N$).

6. An interface according to claim 1, characterised in that at least one of the terminal equipments (DTEₙ) is an equipment using actual information data, and the access means (2) associated with said terminal equipment comprise inverting means (24, $21_m$, $22_m$) which on the one hand connect means (RI) associated with the terminal equipment to receive signalling and data transmission indication signals originating from the terminating equipment (DCE) via the bus (b, $C_1$ - $C_N$) and, on the other hand, a control input (OE) of means (ET) associated with the terminal equipment to transmit data from the terminal equipment (DTEₙ) to the terminating equipment (DCE) via the bus (b, $C_1$ - $C_N$) in response to a data transmission indication signal (I = "ON").

7. An interface according to claim 1, characterised in that at least one of the terminal equipments (DTEₙ) is an equipment which manages the signalling, and the access means (2) associated with the said equipment comprise means ($21_s$, $22_s$) which on the one hand directly connect means (RI) associated with the terminal equipment to receive signalling and data transmission indication signals originating from the terminating equipment (DCE) via the bus (b, $C_1$ - $C_N$) and, on the other hand, a control input (OE) of means (ET) associated with the terminal equipment (DTEₙ)to transmit data to the terminating equipment (DCE) via the bus (b, $C_1$ - $C_N$) in response to a data transmission indication signal (I = "OFF").

8. An interface according to claims 5 to 7, characterised in that the access means (2) associated with each terminal equipment (DTEₙ) comprise means, such as a conductive link (23) adapted to be selectively plugged into one of four pairs of predetermined terminals ($21_1$, $22_1$ to $21_4$, $22_4$) for selectively connecting, on the one hand, an access control output (CA) of the terminal equipment via a changeover switch (24) and directly means (RI) associated with the terminal equipment for receiving signalling and data transmission indication signals originating from the terminating equipment (DCE) via the bus (b), and a terminal of predetermined polarity ( + ) and, on the other hand, a control input (OE) of the means (ET) for transmitting signalling and data to the terminating equipment (DCE) via the bus (b, $C_1$ - $C_N$), respectively when the terminal equipment (DTEₙ) itself controls its access to the bus (b, $C_1$ - CN), is an equipment which uses actual information data, is an equipment managing the signalling, and is a standard equipment using data and managing the signalling.

9. An interface according to any one of claims 1 to 8, characterised in that the bus (b, $C_1$ - $C_N$) is divided into a number of cable sections respectively associated with the terminal equipments (DTE₁ to DTEₙ), each cable section comprising a cable cord ($C_n$) having a first end ($m_n$) connectable to a second end ($m_{n-1}$) of the cable cord ($C_{n-1}$) of the preceding section, a second end ($f_n$) connectable to a first end ($m_{n+1}$) of the cable cord ($C_{n+1}$) of the next section, and a third end ($F_n$) connectable to a connector ($M_n$) serving said terminal equipment (DTEₙ).

10. An interface according to claim 8, characterised in that the first end ($m_n$) of each cable cord ($C_n$) is a connector of a first type, such as a male pin connector, and the second and third ends ($f_n$, $F_n$) of the cable cord are two connectors of a second type, such as a female-pin connector.

**Patentansprüche**

1. Schnittstelle zwischen einer Datenübertragungseinrichtung (ETCD) und mehreren Datenendeinrichtungen (ETTD₁ bis ETTDₙ), wobei die Datenübertragungseinrichtung (ETCD) dazu bestimmt ist, zunächst Daten und/oder Meldungen mit einer eindeutigen Datenendeinrichtung nach einem vorbestimmten Verfahren über eine Verbindung mit einer vorbestimmten Signalleistung auszutauschen, u.a. von Daten in Wortform (Oktette), welche eine vorbestimmte Anzahl von Bits haben, wobei die Verbindung ein Verteilungsbus $(b, C_1 - C_N)$ für die Datenendeinrichtungen ($ETTD_1$ bis $ETTD_N$) ist, **dadurch gekennzeichnet,** daß jedes der Wörter ein Teilbild von zeitweilig gemultiplexten und den entsprechenden Datenkanälen zugeordneten Datenkanälen bildet, wobei jeder Kanal durch eine Anzahl $(x, y, z)$ von vorbestimmten Bitpositionen in einem Wort definiert ist, das als Funktion der Ausgabe der entsprechenden Datenendeinrichtung bestimmt ist, und daß jede der Datenendeinrichtungen ($ETTD_1$ bis $ETTD_N$) Zugriffseinrichtungen (1; 2) zum Steuern des Aussendens von Daten und/oder Meldungen in dem entsprechenden zugeordneten Kanal von der Datenendeinrichtung zur Datenübertragungseinrichtung (ETCD) zugeordnet sind.

2. Schnittstelle nach Anspruch 1, **dadurch gekennzeichnet,** daß die wenigstens einer der Datenendeinrichtungen ($ETTD_n$) zugeordneten Zugrifffseinrichtung (1) eine Datenübertragung in dem entsprechenden zugeordneten Kanal von der Datenendeinrichtung ($ETTD_n$) zur Datenübertragungseinrichtung (ETCD) in Abhängigkeit eines Zeitgebersignals am Anfang des Teilbildes (B) steuert, welches durch die Datenübertragungseinrichtung (ETCD) über den Bus $(b, C_1 - C_N)$ übertragen worden ist.

3. Schnittstelle nach Anspruch 2, **dadurch gekennzeichnet,** daß die Zugriffseinrichtung (1) eine Vorrichtung (11) zum Erzeugen eines Pulses (Q), welcher eine Größe hat, die gleich der Stellung eines Bits in einem Wort (Oktett) in Abhängigkeit eines Zeitgebersignals am Anfang des Teilbilds ist, ein Schieberegister (12), das so viele Stufen hat, wie Bits in einem Wort (Oktett) sind, zum Verschieben einer Stufe infolge des Pulses (Q) im Takt eines Zeitgeber-Bitsignals (S), das von der Datenübertragungseinrichtung (ETCD) über den Bus $(b, C_1 - C_N)$ übermittelt worden ist, und ein ODER-Gatter (13), welches so viele Eingänge hat wie Bitpositionen in einem Wort vorliegen, das der Datenendeinrichtung ($ETTD_n$) zugeordnet ist, umfaßt, wobei die Eingänge des ODER-Gatters mit den Stufen des Registers verbunden sind, mit Plätzen in dem Register, die identisch mit den Bitpositionen in einem Wort sind, welches den Kanal der Datenendeinrichtung definiert, und wobei das ODER-Gatter einen Ausgang aufweist, welcher über eine Datensendeeinrichtung (ET) der Datenendeinrichtung ($ETTD_n$) das Aussenden von Daten zur Datenübertragungseinrichtung (ETCD) während der entsprechenden Bitposition steuert.

4. Schnittstelle nach Anspruch 3, **dadurch gekennzeichnet,** daß das ODER-Gatter (13) so viele Eingänge umfaßt wie Bits in einem Wort (Oktett) sind und daß Vorrichtungen wie aufsteckbare leitende Reiter ($16_1$, $16_2$) vorgesehen sind, um wahlweise Eingänge des ODER-Gatters mit Ausgängen der Stufen des Schieberegisters (12) als Funktion der Anzahl der Bit-Positionen, die der Datenendeinrichtung ($ETTD_n$) zugeordnet sind, und der Bitpositionen in einem Wort zu verbinden.

5. Schnittstelle nach Anspruch 1, **dadurch gekennzeichnet,** daß die Zugriffseinrichtung (2) wenigstens einer der Datenendeinrichtungen ($ETTD_n$) den Zugriff auf den Bus (b) steuert und einen Steuerzugriffsausgang (CA) der Einrichtung mit einem Steuereingang (OE) der Datensendeeinrichtung (ET) verbindet, die der Datenendeinrichtung zugeordnet ist, um das Aussenden von Daten zur Datenübertragungseinrichtung (ETCD) über den Bus $(b, C_1 - C_N)$ zu steuern.

6. Schnittstelle nach Anspruch 1, **dadurch gekennzeichnet,** daß wenigstens eine der Datenendeinrichtungen ($ETTD_n$) eine Einrichtung ist, die die genannten Informationsdaten verwendet, wobei die Zugriffseinrichtung (2), die dem Datenendgerät zugeordnet ist, Invertiereinrichtungen ($24$, $21_2$, $22_2$) aufweist, welche einerseits Vorrichtungen (RI), die der Datenendeinrichtung zum Empfangen von Anzeigesignalen für die Aussendung von Daten und Meldungen, welche von der Datenübertragungseinrichtung (ETCD) über den Bus $(b, C_1 - C_N)$ ausgehen, zugeordnet sind, und andererseits einen Steuereingang (OE) einer der Datenendeinrichtung zugeordneten Einrichtung (ET) zum Senden von Daten von der Datenendeinrichtung ($ETTD_n$) zur Datenübertragungseinrichtung (ETCD) über den Bus $(b, C_1 - C_N)$ in Abhängigkeit eines Anzeigesignals für das Aussenden von Daten (I = "ON") verbinden.

7. Schnittstelle nach Anspruch 1, **dadurch gekennzeichnet,** daß wenigstens eine der Datenendeinrichtungen (ETTDn) eine Einrichtung ist, die Anzeigesignale leitet, und daß die Zugriffseinrichtung (2), die der Einrichtung zugeordnet ist, Vorrichtungen ($21_3$, $22_3$) aufweist, um direkt einerseits der Datenendeinrichtung zugeordnete Vorrichtungen (RI) zum Empfangen von Anzeigesignalen für das Aussenden von Daten und Mitteilungen, die von der Datenübertragungseinrichtung (ETCD) über den Bus (b, $C_1$ - $C_N$) ausgehen, und andererseits einen Steuereingang (OE) von der Datenendeinrichtung (ETTD$_n$) zugeordneten Einrichtungen (ET) zum Übertragen von Daten auf die Einrichtung (ETCD) über den Bus (b, $C_1$ - $C_N$) in Abhängigkeit eines Anzeigesignals für das Aussenden von Signalen (I = "OFF") verbinden.

8. Schnittstelle nach einem der Ansprüche 5 bis 7, **dadurch gekennzeichnet,** daß die Zugriffseinrichtungen (2), die jeder Datenendeinrichtung (ETTDn) zugeordnet sind, Vorrichtungen wie leitende Reiter oder Stecker (23) aufweisen, die wahlweise in eines der vier Paare von vorbestimmten Anschlüssen ($21_1$, $22_1$ bis $21_4$, $22_4$) einsteckbar sind, um wahlweise einerseits einen Steuerzugriffsausgang (CA) der Datenendeinrichtung über einen Invertierer (24) und direkt Vorrichtungen (RI), die der Datenendrichtung zum Empfangen von Anzeigesignalen für die Aussendung von Daten und Meldungen, die von der Datenübertragungseinrichtung (ETCD) über den Bus (b) ausgehen, zugeordnet sind, und einen Anschluß von vorbestimmter Polarität (+) und andererseits einen Steuereingang (OE) von Einrichtungen (OT) zum Übertragen von Daten und Meldungen auf die Datenübertragungseinrichtung (ETCD) über den Bus (b, $C_1$ - $C_N$) zu verbinden, bzw. wenn das Datenendgerät (ETTD$_n$) selbst seinen Zugriff auf den Bus (b, $C_1$ - $C_N$) steuert, eine Einrichtung ist, die die genannten Informationsdaten verwendet, eine Einrichtung ist, die Anzeigesignale leitet und eine Standardeinrichtung ist, die Daten verwendet und Meldungen leitet.

9. Schnittstelle nach einem der Ansprüche 1 bis 8, **dadurch gekennzeichnet,** daß der Bus (b, $C_1$ - $C_N$) in mehrere Kabelabschnitte aufgeteilt ist, die jeweils den entsprechenden Datenendgeräten (ETTD$_1$ bis ETTD$_N$) zugeordnet sind, wobei jeder Kabelabschnitt einen Kabelstrang ($C_n$) mit einem ersten äußeren Bereich ($m_n$,), der mit einem zweiten äußeren Bereich ($m_n$ - 1) des Kabelstranges ($C_n$ - 1) des vorangehenden Abschnittes verbindbar ist, einem zweiten äußeren Bereich ($f_n$) der mit einem ersten äußeren Bereich ($m_n$ + 1) des Kabelstranges ($C_n$ + 1) des folgenden Abschnittes verbindbar ist, und einem dritten äußeren Bereich ($F_n$), der mit einem Verbinder ($M_n$) verbindbar ist, der das Datenendgerät (ETTD$_n$) versorgt, umfaßt.

10. Schnittstelle nach Anspruch 9, **dadurch gekennzeichnet,** daß der erste äußere Abschnitt ($m_n$) jedes Kabelstranges ($C_n$) ein Verbinder eines ersten Types wie eines männlichen Kabelsteckers ist und der zweite und dritte äußere Abschnitt (fn' Fn) des Kabelstranges zwei Verbinder eines zweiten Types wie ein weiblicher Kabelstecker sind.

# FIG.1

# FIG.3

$OFF = 1$
$ON = 0$

$t = 1 octet$

11

# FIG.2

# FIG.4